# EUROPEAN PATENT APPLICATION

(11) **EP 1 102 170 A1**
(43) Date of publication of application: **23.05.2001**
(21) Application number: 00931550.8
(22) Date of filing: 24.05.2000
(51) Int. Cl.: G06F 13/00, H04L 12/28, G06F 9/44, H04Q 9/00, H04N 5/91

(54) **INFORMATION PROCESSING DEVICE AND METHOD, AND INFORMATION PROCESSING SYSTEM**

(30) Priority: 24.05.1999 JP 14398999; 17.06.1999 JP 17164099
(71) Applicant: Sony Corporation, Tokyo 141-0001 (JP)
(72) Inventor: HORIGUCHI, Mari Sony Corporation, Shinagawa-ku, Tokyo 141-0001 (JP)
(74) Representative: Horner, David Richard
(86) International application number: JP0003328
(87) International publication number: WO0072154

(57) **Abstract**

The target has a descriptor writable by the controller to create in the descriptor in an object whose ID is managed by the controller. Thus the controller manages the object ID, issues an object operate command to the BBS of the target, writes information to an object created according to a create command, and then rewrites the object ID. Thereby, the list structure and data structure can be made definite, and it is possible to allow bulletin boards of more than one type or a plurality of bulletin boards of the same type to coexist successfully.

## Description

### Technical Field

The present invention relates to an information processing apparatus and method and an information processing system, suitably usable in an electronic apparatus such as an AV device connected to a network and remote-controlled. More specifically, the present invention relates to an information processing apparatus and method and an information processing system intended to enable a plurality of electronic apparatuses connected to each other via a network to share information in each of the electronic apparatuses by using so-called AV/C commands.

### Background Art

Recently, there has been developed an AV device adapted to transmit and receive information to and from another AV device via a network using the IEEE 1394 serial data bus defined in the IEEE (the Institute of Electrical and Electronics Engineers) for example. The AV devices connected to this network can control each other using a predetermined digital interface command (AV/C Command and Transaction Set: will be referred to simply as "AV/C command set" hereinafter).

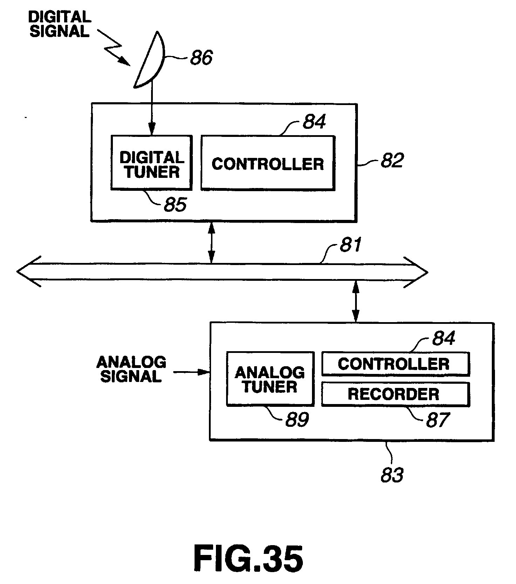

FIG. 35 shows an example of a system connected to an IEEE 1394 serial data bus 81 (will be referred to as "bus 81" hereinafter wherever appropriate) and controllable with the AV/C command set.

In the system shown in FIG. 35, an IRD (integrated receiver decoder) 82 to receive a digital satellite broadcasting for example and a DVCR (digital video cassette recorder) 83 are connected to each other via the us 81.

For example, in the system in FIG. 35, an image received by the IRD 82 can be recorded by the DVCR 83 using the AV/C command set under the control of the IRD 82. Further in the system in FIG. 35, the IRD 82 and DVCR 83 can be used to make a so-called scheduled recording.

For a scheduled recording in the system shown in FIG. 35, the IRD 82 itself and DVCR 83 are controlled by a controller 84 provided in the IRD 82, for example. Conditions (channel, start time, etc.) for the scheduled recording are set in the IRD 82. Note that a digital tuner 85 in the IRD 82 and a recorder 87 in the DVCR 83, etc. are subject to the controller 84 of the IRD 82, namely, they are subunits controlled by the controller 84.

When a start time preset for the scheduled recording is reached, the controller 84 provides a channel select command to the digital tuner 85 in the IRD 82. Upon reception of the command, the digital tuner 85 selects a channel preset for the scheduled recording from signals captured by a CS antenna 86, and provides video signal, etc. on the selected channel to the bus 81.

At the same time, the controller 84 sends a recording start command to the recorder 87 in the DVCR 83 via the bus 81. Upon reception of the command, the recorder 87 extracts, from the signals on the bus 81, video signal, etc. on the channel selected, and having been received, by the digital tuner 85 in the IRD 82, and records the video signal to a recording medium such as a magnetic tape.

Note that the controller 84 in the DVCR 83 controls the actual operation of an analog tuner 89 and recorder 87 for example, to record the video signal, etc. received by the analog tuner 89 for example by means of the recorder 87.

In the system shown in FIG. 35, the scheduled recording is effected as in the above.

For remote control of units connected to a conventional network system by using the AV/C command set, the network is adapted such that information on subunits in each of the units can be shared by all the units by setting a list of information in each controlled subunit. That is , in the system shown in FIG. 35, a list of information to be shared by all the units is set in each of the controlled subunits including the subunit of the DVCR 83 (recorder 87 in FIG. 35) and subunit of the IRD 82 (digital tuner 85 in FIG. 35).

With such a method, however, the content of sharable information is limited to those related to each subunit.

Also, with the development of the network system, it will be required in future that the sharable information should have a content specific to each subunit as well as a variety of contents.

Thus, the Applicant of the present invention proposed an AV/C bulletin board subunit (will be referred to as "AV/C BBS" or simply as "BBS" wherever appropriate hereinafter) (see"AV/C Bulletin Board Subunit - General Specification", 1394 Trade Association, January 27, 1999. Rev. 0.38). In the AV/C BBS, arbitrary information is made sharable by BBSs and the information can be used to permit mutual control between arbitrary units.

In the AV/C BBS, however, the method of coexistence when bulletin boards of more than one type exist and the list structure when a plurality of bulletin boards of the same type exist are not definite.

Therefore, it is required that a data structure accommodating the existence of bulletin boards of more than one type and of the plurality of bulletin boards of the same type as in the above, should be definite.

Also, it is desired that write of new information to the BBS and rewrite of information in the BBS can successfully be done without any failure.

### Disclosure of the Invention

Accordingly, the present invention has an object to overcome the above-mentioned drawbacks of the prior art by providing an information processing apparatus and method, and an information processing system, capable of making definite the list and data structures in the AV/C BBS, making bulletin boards of more than one type and a plurality of bulletin boards of the same type to coexist without any failure in the AV/C BBS, and permitting write of new information to the AV/C BBS and rewrite of information in the AV/C BBS without any failure.

The above object can be attained by providing an information processor controlled by apparatuses connected to each other via a network, including according to the present invention: a predetermined description area to which write can be made from outside; and means for creating, upon reception from an external apparatus of a command for creation in the description area of a predetermined object whose identification information is managed by the external apparatus, an object whose sole information in the identification information is set to a predetermined value and for which the length of a field in which the object can be written is set to a predetermined one.

In the above information processor, the object creating means deletes the object whose identification information is the predetermined value just after the predetermined description area is forcibly closed.

Also the above object can be attained by providing an information processor controlled by apparatus connected to each other via a network, including according to the present invention: means for managing the identification information for at least a predetermined object; and means for issuing a command for operation of the predetermined object to external apparatuses capable of creating the predetermined object and having a predetermined description area to which write can be made from outside; the managing means rewriting, for an object created according to an object create command supplied from the operate command issuing means, the predetermined-object identification information after writing information to a field to which the predetermined object can be written.

In the above information processor, the managing means rewrites the object identification information on an attempt. Also, the managing means examines the content of the sole information in the predetermined-object identification information, and when it is decided by the managing means that the sole information is the predetermined value, the operation instruction issuing means issues a command for deletion of the predetermined object to the external apparatuses.

Also the above object can be attained by providing an information processing method for controlling apparatuses connected to each other via a network, including, according to the present invention, a step of: creating, upon reception from an external apparatus of a command for creation in a description area of a predetermined object whose identification information is managed by the external apparatus, an object whose sole information in the identification information is set to a predetermined value and for which the length of a field in which the object can be written is set to a predetermined one.

In the above information processing method, the object whose identification information is the predetermined value is deleted just after the predetermined description area is forcibly closed.

Also the above object can be attained by providing an information processing method for controlling apparatuses connected to each other via a network, including, according to the present invention, steps of: managing the identification information for at least a predetermined object; issuing a command for operation of the predetermined object to external apparatuses capable of creating the predetermined object and having a predetermined description area to which write can be made from outside; and rewriting, for an object created according to an object create command supplied from the operate command issuing means, the predetermined-object identification information after writing information to a field to which the predetermined object can be written.

In the above information processing method, the identification information for the object is rewritten on an attempt. Also, the content of the sole information in the predetermined-object identification information is examined, and when it is decided that the sole information is the predetermined value, a command for deletion of the predetermined object is issued to the external apparatuses.

Also the above object can be attained by providing an information processor for controlling apparatuses connected to each other via a network, including according to the present invention: means for managing the identification information for at least a predetermined object; and means for issuing a command for operation of the predetermined object to external apparatuses capable of creating the predetermined object and having a predetermined description area to which write can be made from outside; the managing means collectively rewriting, for an object created according to an object create command supplied from the operate command issuing means, the predetermined-object identification information using instructive information for updating a write command from the operation instruction issuing means after writing, using instructive information for partial replacement of the write command from the operation instruction issuing means, information to a field to which the predetermined object can be written.

Also the above object can be attained by providing an information processing method for controlling apparatuses connected to each other via a network, including, according to the present invention, steps of: managing the identification information for at least a predetermined object; means for issuing a command for operation of the predetermined object to external apparatuses capable of creating the predetermined object and having a predetermined description area to which write can be made from outside; and collectively rewriting, for an object created according to an object create command, the predetermined-object identification information using instructive information for updating a write command, after writing, using instructive information for partial replacement of the write command, information to a field to which the predetermined object can be written.

Also the above object can be attained by providing an information processing system including according to the present invention: a first information processor including: a predetermined description area to which write can be made from outside; and means for creating, upon reception from an external apparatus of a command for creation in the description area of a predetermined object whose identification information is managed by the external apparatus, an object whose sole information in the identification information is set to a predetermined value and for which the length of a field in which the object can be written is set to a predetermined one; and a second information processor including: means for managing the identification information for at least a predetermined object; and means for issuing a command for operation of the predetermined object to external apparatuses capable of creating the predetermined object and having a predetermined description area to which write can be made from outside; the managing means rewriting, for an object created according to an object create command supplied from the operate command issuing means, the predetermined-object identification information after writing information to a field to which the predetermined object can be written.

In the above information processing system, the object creating means in the first information processor deletes the object whose identification information is the predetermined value just after the predetermined description area is forcibly closed. Also, the managing means in the second information processor rewrites the object identification information on an attempt. Further, the managing means in the second information processor examines the content of the sole information in the predetermined-object identification information, and when it is decided by the managing means that the sole information is the predetermined value, the operation instruction command issuing means in the second information processor issues a command for deletion of the predetermined object is issued to the external apparatuses. Moreover, the managing means in the second information processor collectively rewrite, for an object created according to an object create command supplied from the operate command issuing means, the predetermined-object identification information using instructive information for updating a write command from the operation instruction issuing means after writing, using instructive information for partial replacement of the write command from the operation instruction issuing means, information to a field to which the predetermined object can be written.

Also the above object can be attained by providing an information processing method including, according to the present invention: a first information processing step of: means for creating, upon reception from an external apparatus of a command for creation, in a predetermined description area to which write can be made from outside, of a predetermined object whose identification information is managed by the external apparatus, an object whose sole information in the identification information is set to a predetermined value and for which the length of a field in which the object can be written is set to a predetermined one; and a second information processing step including steps of: managing the identification information for at least a predetermined object; issuing a command for operation of the predetermined object to external apparatuses capable of creating the predetermined object and having a predetermined description area to which write can be made from outside; rewriting, for an object created according to an object create command, the predetermined-object identification information after writing information to a field to which the predetermined object can be written.

At the first image processing step in the above information processing method, the object whose identification information is the predetermined value is deleted just after the predetermined description area is forcibly closed. Also, at the second information processing step, the object-identification information is rewritten on an attempt. Further, at the second information processing step, the content of the sole information in the predetermined-object identification information is examined, and when it is decided that the sole information is the predetermined value, a command for deletion of the predetermined is issued to the external apparatuses. Moreover, at the second information processing step, the predetermined-object identification information is collectively rewritten for an object created according to the object create command, using instructive information for updating a write command, after writing, using instructive information for partial replacement of the write command from the operation instruction issuing means, information to a field to which the predetermined object can be written.

### Brief Description of the Drawings

FIG. 1 shows the construction of a network system to which the AV/C BBS according to the present invention is applied.
FIG. 2 schematically illustrates a data structure of SID (subunit identifier descriptor).
FIG. 3 shows a format of BB SID (bulletin board subunit identifier descriptor) used in the network system in FIG. 1.
FIG. 4 explains a value of *generation_ID*.
FIG. 5 explains a value of *root_object_list_ID*.
FIG. 6 explains a *supported_board_type_specific_information* field.
FIG. 7 explains a range assigned to SID list ID.
FIG. 8 shows the data structure of write-enabled BBS board list descriptor.
FIG. 9 shows the data structure of read-only board list descriptor.
FIG. 10 shows the data structure of information list descriptor.
FIG. 11 explains information described in *Resource Schedule Entry*.
FIG. 12 explains *start_time* field.
FIG. 13 explains *duration* field.
FIG. 14 explains *repeat_type*.
FIG. 15 explains *repeat_information* field indicating day of week and number of repeated events.
FIG. 16 explains *repeat_information* field which would be when a scheduled action is repeated at predetermined intervals.
FIG. 17 explains *Subunit_Resource_Info_blocks*.
FIG. 18 explains a bulletin board having a multi-layered board type and information.
FIG. 19 shows a stack model of AV/C command set.
FIG. 20 explains FCP command and response.
FIG. 21 explains a relation between FCP command and reponse in further detail.
FIG. 22 shows the data structure of asynchronous packet of AV/C command.
FIG. 23 shows a specific example of *ctype/response* of the asynchronous packet.
FIG. 24 shows a specific example of *subunit type* and *opcode*.
FIG. 25 shows the data structure of AV/C CREATE command.
FIG. 26 shows a value which can be designated by *subfunction_1* in FIG. 25.
FIG. 27 shows a content which would be when *subfunction_1_specification* for *subfunction_1* in FIG. 25 is 01₁₆ for example.
FIG. 28 shows each field value in FIG. 27.
FIG. 29 shows a procedure for creation of a new object, effected at the BBS controller and target.
FIG. 30 shows a format of WRITE OPEN command.
FIG. 31 shows a format of WRITE DESCRIPTOR command.
FIG. 32 shows a format of CLOSE command.
FIG. 33 shows in detail the construction of IRD in the system in FIG. 1.
FIG. 34 shows in detail the construction of DVCR in the system in FIG. 1.
FIG. 35 shows the configuration of the conventional network system.

### Best Mode for Carrying Out the Invention

The preferred embodiments of the present invention will be described in further detail below with reference to the accompanying drawings.

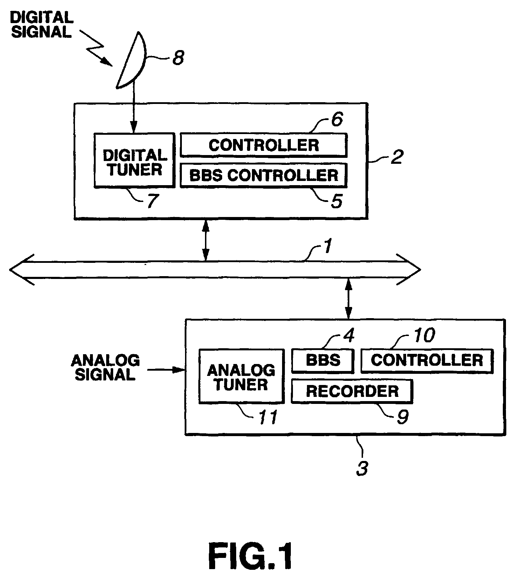

Referring now to FIG. 1, there is illustrated the construction of a network system to which the AV/C BBS according to the present invention is applied.

As shown in FIG. 1, the network system includes an IEEE 1394 serial data bus 1 (will be referred to as "bus 1" hereinafter wherever appropriate) via which IRD 2 to receive digital satellite broadcasting and DVCR (e.g., D-VHS, etc.) 3 are connected as system units to each other. The DVCR 3 has provided therein an AV/C BBS 4 to publicize information to other units and subunits.

The IRD 2 has provided therein a controller 5 able to control other subunits using the AV/C command set and to read and write AV/C BBS information (this controller will be referred to as "BBS controller" hereinafter for discrimination from other controllers). The IRD 2 includes a digital tuner 7 and the DVCR 3 includes a recorder 9. It should be noted that these digital tuner 7 and recorder 9 are subunits which are controller by the BBS controller 5 using he AV/C command set. In the embodiment, the AV/C BBS information is read and written under the control of an AV/C descriptor mechanism, for example, defined by the AV/C command set. The IRD 2 has also provided therein a controller 6 to control the actual operation of the digital tuner 7, for example, in the IRD 2.

The network system shown in FIG. 1 and constructed as in the above functions as will be described below concerning a scheduled recording of a desired program for example by the DVCR 3 for example:

For a scheduled recording of a desired program for example by the DVCR 3, the BBS controller 5 of the IRD 2 for example controls, using the AV/C command set, the digital tuner 7 in the IRD 2 itself and recorder 9 in the DVCR 3.

The BBS controller 5 in the IRD 2 sets conditions for the scheduled recording (such as a channel, start time, etc.) by means of the controller 6, and further writes information such as channel, start time, etc. set for the scheduled recording into the BBS 4 of the DVCR 3.

When the start time set for the scheduled recording is reached, the BBS controller 5 will provide a command for selection of the set channel to the digital tuner 7 in the IRD 2. Upon reception of this command, the digital tuner 7 will select the set channel from signals captured by a CS antenna 8 also included in the network system, and provide video signal, etc. on the selected channel to the bus 1 (IEEE 1394 serial data bus).

Also when the start time set for the scheduled recording is reached, the BBS controller 5 will send a command for starting of the recording to the recorder 9 in the DVCR 3 via the bus 1 taking in consideration information described in a BBS 4 in the DVCR 3. Upon reception of the command, the recorder 9 in the DVCR 3 will extract, from the signal on the bus 81, the video signal, etc. received by the digital tuner 7 in the IRD 2 from the selected channel, and record the video signal into a recording medium such as a magnetic tape or the like.

The DVCR 3 has also provided therein a controller 10 to control the actual operations of an analog tuner 11 also provided in the DVCR 3 and the recorder 9 to write the video signal, etc. received by the analog tuner 11 by means of the recorder 9.

The scheduled recording can be done in the network system shown in FIG. 1 as in the above.

The BBS data structure in this embodiment will be described below:

Prior to the description of the BBS data structure, the data structure of SID (subunit identifier descriptor) in the AV/C command set will first be described.

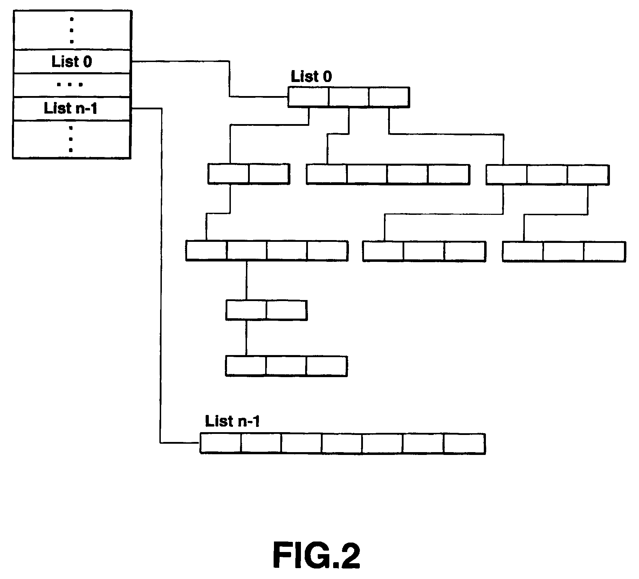

Referring now to FIG. 2, there is schematically illustrated a data structure of the SID (subunit identifier descriptor).

As shown in FIG. 2, the SID (subunit identifier descriptor) is formed from hierarchical lists. The lists show a channel from which information can be received if the list concerns the tuner for example, and a music recorded in the recording medium if the list concerns the recorder for example, respectively. The highest list in the hierarchical structure is called "root list". For example, a List 0 is a root of lists at lover levels. Lists 2 to n-1 are also root lists. There are as many root lists as objects. The object referred to herein is each channel in a digital broadcasting if the subunit is a tuner for example. All lists at one level of the hierarchical structure have information common to them.

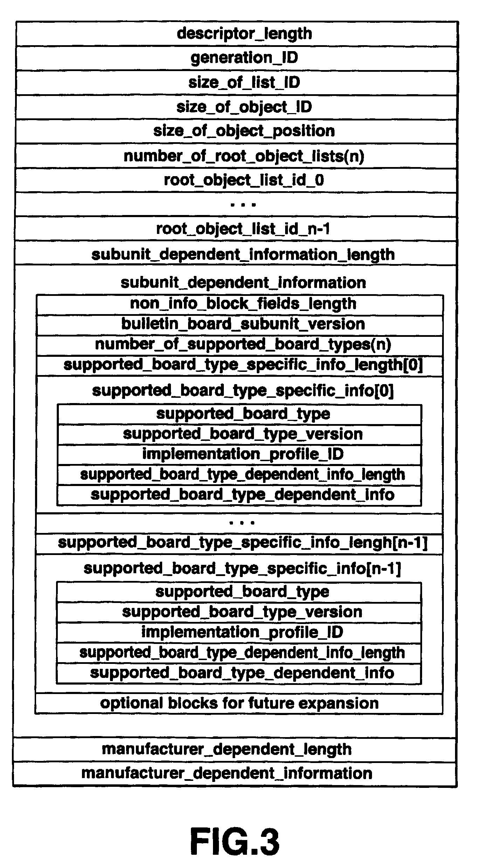

Referring now to FIG. 3, there is illustrated a format of BB SID (bulletin board subunit identifier descriptor) used in the network system in FIG. 1. The BB SID is defined in the AV/C General Specification, and it is a list each subunit has to keep. Note that the controller is to read this list at a first access to the BBS.

In the BB SID shown in FIG. 3,*descriptor_length* indicates the length (number of bytes) of the descriptor structure. Its value does not include the value of *descriptor_length* itself.

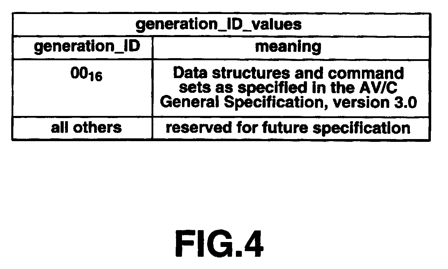

In the BB SID, *Generation_ID* indicates which AV/C descriptor format, namely, which version, is used. Its current value is "00₁₆" as shown in FIG. 4. The "00₁₆" means that the data structure and command are of the AV/C Generation Specification, version 3.0. Also, all other values except for "00₁₆" are reserved for a future specification as shown in FIG. 4.

*Size_of_list_ID of SID* in FIG. 3 indicates the number of bytes of the list ID. *Size_of_object_ID* indicates the number of bytes of the object ID. *Size_of_object_position* shows the number of bytes used when the position of an object in a list is referenced to.

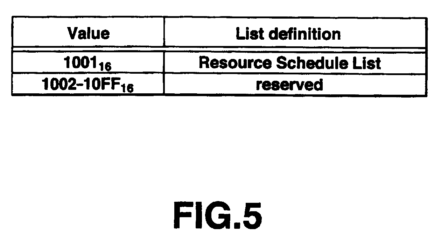

*Number_of_root_object_lists* indicates the number of root object lists to which the BBS is related directly. *Root_object_list_id_x* (*x* = 0, 1, 2, ..., n-1) indicates ID for each of the root object lists to which the BBS is related directly. The value of *root_object_list_id* is a predetermined one "1001₁₆" as shown in FIG. 5 when it represents RSB. By fixing an ID indicating RSB (described as*Resource Schedule List* in FIG. 5) to a predetermined value, RSB can be read more easily.

*Subunit_dependent_information-length* indicates the length of *subunit_dependent_information* follwing it, and information on a format and content dependent upon the BBS is described in *subunit_dependent-information*. *Subunit_dependent_information* includes in *non_info_block* thereof *fields_length*, *bulletin_board_subunit_version*, *number_of_supported_board_tytpe* (n), *suported_board_type_specific_of_length* [0] as well as *supported_board_type_specific_info* [0] to *supported_board_type_specfic_info* [n-1] and *supported_board_type_specific_of_length* [0] to *supported_board_type_specific_of_length* [n-1], indicating their lengths respectively.

Further, BBS has described therein *manufacturer_dependent_length* indicating the length of *manufacturer_dependent_information* and *manfacturer_dependent_information* including information depending upon a manufacturer.

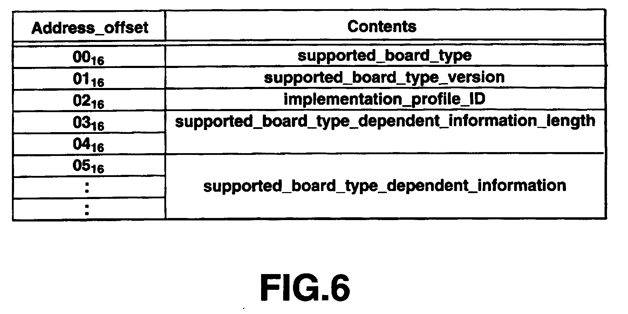

Also, *supported_board_type_specific_information* field shown in FIG. 3 is formatted as shown in FIG. 6. As shown in FIG. 6, *supported_board_type* has described therein a value "01₁₆" indicating RSB shown in FIG. 5. *Supported_board_type_version* indicates a version number of the Bulletin Board Type Specification. *Inplementation_profile_ID* indicates a profile ID version for the board type. *Supported_board_type_dependent_information_length* indicates the number of bytes of *supported_type_dependent_information*. *Supported_board_tytpe_dependent_information* has described there in information specific to each board type specification.

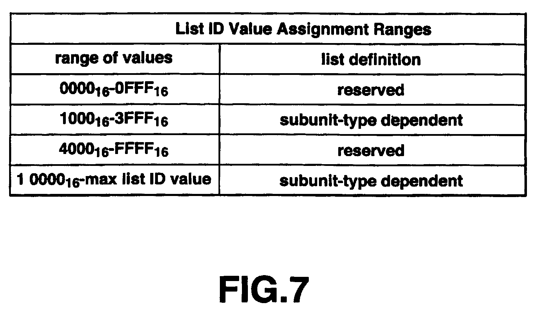

Referring now to FIG. 7, there is illustrated a range assigned to SID list ID shown in FIG. 3. As shown in FIG. 7, "0000₁₆" to 0FFF₁₆" and "4000₁₆" to "FFFF₁₆" are reserved as assigned ranges for a future specification. Of "1000₁₆" to "3FFF₁₆", " "1000₁₆" to 1FFF₁₆" are determined as root list IDs, and "2000₁₆" to 3FFF₁₆" are free spaces for default lists. Further, "10000₁₆" to "ma. list ID value" are provided for discrimination of function-type dependent information. Note that these root list ID values are publicized in the Specification and others.

Next, an example of board list descriptor searched with *root_object_list_id* of BB SID in FIG. 3 will be described.

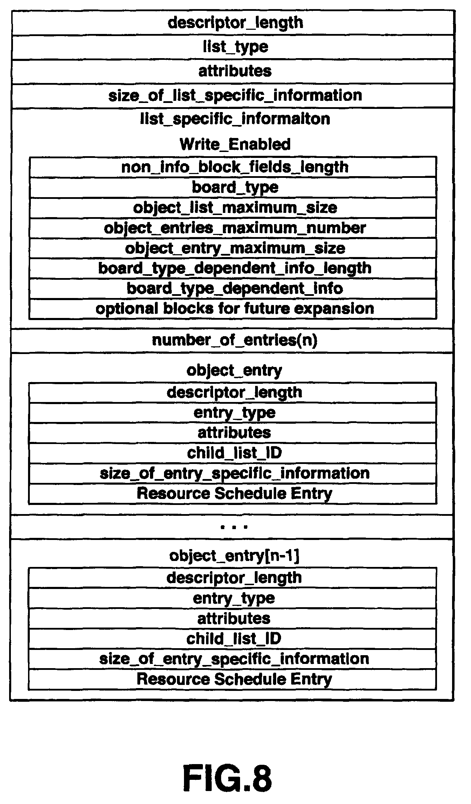

Referring now to FIG. 8, there is shown the data structure of write-enabled BBS board list descriptor as a board descriptor searched with the *root_object_list_id* of BB SID in FIG. 3.

In FIG. 8, *descriptor_length* indicates the length of the descriptor. *List_type* has described therein that the bulletin board is a write-enabled one. Attribute has described therein whether the bulletin board has an object ID. *Side_of_list_specific_information* indicates the length of *list_specific_information*, and *list_specific_information* varies depending upon *list_type*.

*Non_info_block_fields_length* of write-enabled *list_specific_information* indicates the number of *non_info_block_fields*, board_type indicates the type of the bulletin board. *Object_list_maximum_size* indicates a maximum number of object entries in the list. *Object_entry_maximum_number* indicates a maximum number of object entries. *Object_entry_maximum_size* indicates a maximum size of the object entry. *Board_type_dependent_information_length* indicates the length of *board_type_dependent_information*, and *board_type_dependent_information* indicates information specific to the board type.

*Descriptor_length of object_entry* indicates the length of the descriptor. *Entry_type* has a value "80₁₆" indicative of a bulletin board for a board entry descriptor. Attribute has described therein whether the descriptor has a Child List. When it has a Child List, *child_list_ID* is provided. *Child_list_ID* indicates an ID of other board list descriptor. *Size_of_entry_specific_information* indicates the size of *Resource Schedule Entry* as *entry_specific_information*. *Resource Schedule Entry* has described therein information concerning an event.

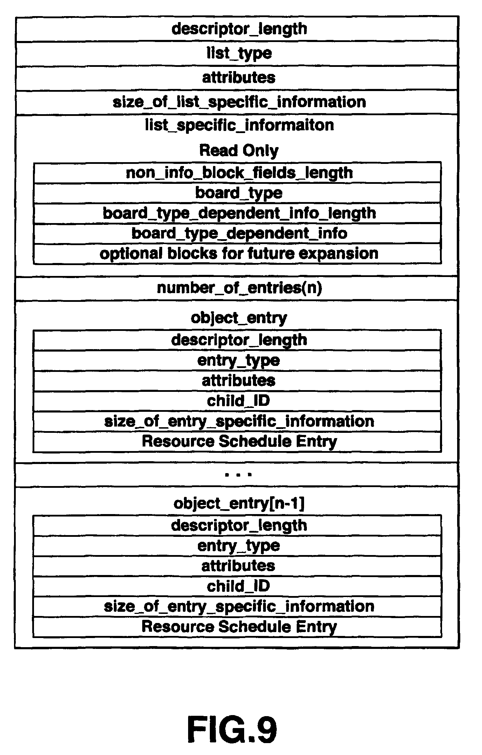

Referring now to FIG. 9, there is illustrated the data structure of read-only board list descriptor as an example of the board descriptor searched with *root_object_list_id* of BB SID in FIG. 3.

The data structure of the read-only board list descriptor shown in FIG. 9 is generally same as that of the write-enabled board list descriptor shown in FIG. 8. Read-only *list_specific_information* is provided in place of write-enabled *list_specific_information* in FIG. 8, and *list_type* indicates that the bulletin board is a read-only board.

Different from the write-enabled *list_specific_information*, the read-only *list_specific_information* has not *object_list_maximum_size*, *object_list_maximum_size*, *object_entry_maximum_number* and *object_entry_maximum_size*.

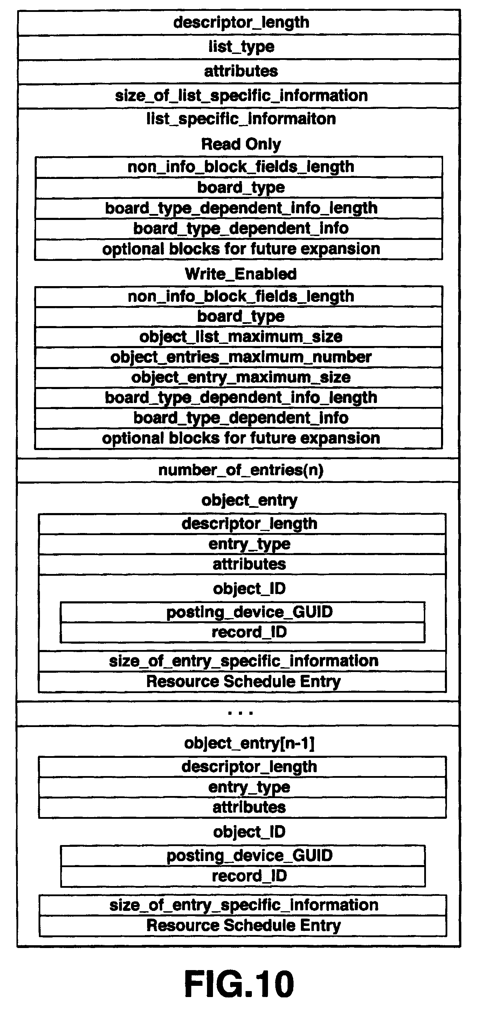

Referring now to FIG. 10, there is illustrated the data structure of information list descriptor as an example of the information list descriptors searched with *root_object_list_id* of the BB SID in FIG. 3 and *child_list_ID* in FIGS. 8 and 9. The information list descriptors include a write-enabled and read-only ones.

In FIG. 10, *descriptor_length* indicates the length of the descriptor. *List_type* has described therein which the bulletin board is, a read-only or write-enabled one. Attribute has described therein whether the descriptor has an object ID. *Size_of_list_specific_information* indicates the length of *list_specific_information*, and *list_specific_information* varies depending upon *list_type*.

*Non_info_block_fields_length* of the read-only *list_specific_information* indicates the number of bytes of the non-info bloc fields, and *board_type* indicates the type of the bulletin board. *Board_type_dependent_information_length* indicates the length of *board_type_dependent_information*, *board_type_dependent_information* indicates information specific to the *board type*.

*Non_info_of_block_fields_length* of write-enabled *list_specific_information* indicates a number of bytes of non info block fields, and board_type indicates the type of the bulletin board. *Object_list_maximum_size* indicates a maximum number of the object entries in the list. *Object_entry_maximum_size* indicates a maximum size of the object entry. *Board_type_dependent_information_length* indicates the length of *board_type_dependent_information*, and *board_type_dependent_information* indicates information specific to the board type.

*Descriptor_length of object_entry* indicates the length of the descriptor. For a board entry descriptor, *entry_type* has a value "80₁₆" indicating a bulletin board. *Object_ID* is composed of *posting_device_GUID* and *record_ID*. *Posting_device* means a controller having posted information to the BBS, and therefore *posting_device_GUID* indicates GUID of the controller. *Record_ID* indicates an ID assigned to an event in a unit. *Size_of_entry_specific_information* indicates the size of *Resource Schedule Entry* as *entry_specific_information*.

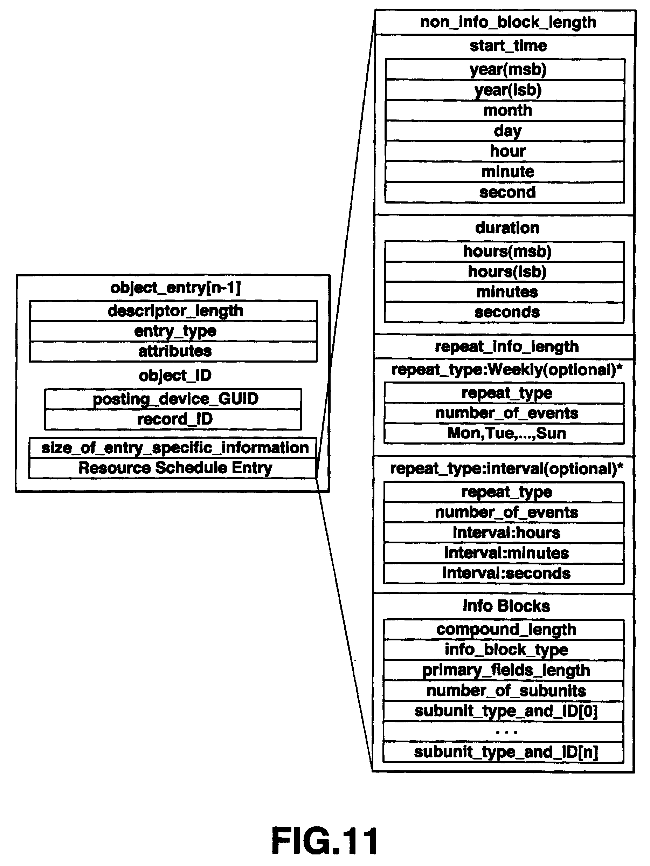

It should be noted that when a scheduled recording is effected as in the embodiment, information shown in FIG. 11 is described in the *Resource Schedule Entry*.

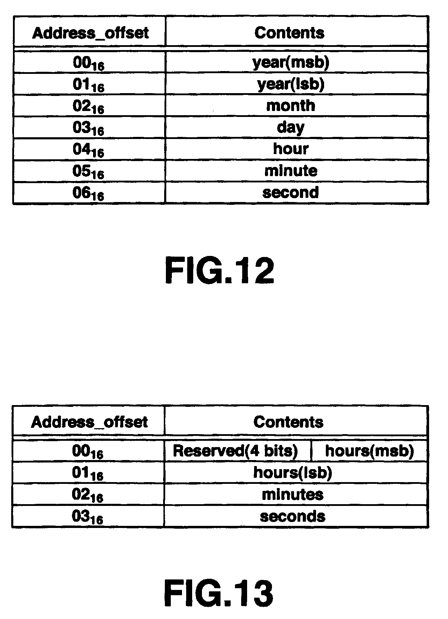

In FIG. 11, *non_info_block_length* indicates the number of bytes of non-info block fields down to *repeat_information*. *Start_time* indicates a year, month, day, hours, minutes and seconds at which an event (a scheduled recording in this embodiment) is started as shown in FIG. 12. The year is indicated with 16 bits; each of four figures indicating an AD year are indicated with BCD (binary coded decimal) of 4 bits. The month is indicated with 8 bits; each of two figures indicating a two-digit number ranging from January (01) to December is represented by BCD of 4 bits. The day is indicated with 8 bits; each of figures indicating a two-digit number (day) ranging from the first day to thirty-first day is represented by BCD of 4 bits. The hours is indicated with 8 bits; each of two figures indicating a two-digit number ranging from 0 (00) to 24 o'clock is represented by BCD of 4 bits. The minutes is indicated with 8 bits; each of two figures indicating a two-digit number ranging from 0 (00) to 60 minutes is represented by BCD of 4 bits. The seconds is indicated with 8 bits; each of two figures indicating a two-digit number ranging from 0 (00) to 60 seconds is indicated with BCD of 4 bits. Thus, since *start_time* is represented by BCDs, it can easily be discriminated. Also, the start time is represented by a local time.

*Duration* indicating the length of an event is indicated with hours, minutes and seconds as shown in FIG. 13. In *hours*, three figures indicating a three-digit hour are represented by BCD of 4 bits, respectively. Namely, the hours is represented by a total of 12 bits. In *minutes*, two figures indicating a two-digit minutes are represented by BCD of 4 bits, respectively. That is, the minutes is represented by a total of 8 bits. In *seconds*, two figures indicating a two-digit seconds are represented by BCD of 4 bits, respectively. Namely, the seconds is represented by a total of 8 bits. By addition *duration* to *start_time*, an end time of the event is indicated. Thus, by representing the length of an event as *duration* with an end time not represented directly, it is not necessary to change the end time even when *start_time* of an event is changed. Therefore, the time can easily be changed.

*Repeat_information_length* indicates the length of *repeat_information*. *Repeat_information* indicate when and how a schedule is repeated (the scheduled recording is repeated in this embodiment). When a scheduled action is not repeated, *repeat_information_length* will be "00₁₆". *Repeat_information* varies in content depending upon a selected repeat type.

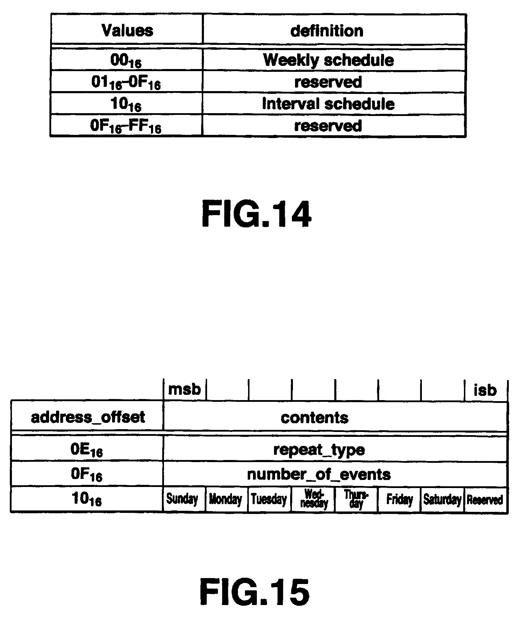

As shown in FIG. 14, *Repeat_type* includes "01₁₆" for *Weekly schedule* and "10₁₆" for *Interval schedule*. When a schedule is repeated every week, the posting device (BBS controller 5 in the IRD 2 in this embodiment) indicates the day of week and number of events to be repeated as shown in FIG. 15. *Repeat_type* has described therein "00₁₆" shown in FIG. 14. *Number_of_events* indicates the number of events. Weekly flags ranging from Sunday to Saturday indicate the day of week on which events to be repeated is started. For example, when an event (scheduled recording in this embodiment) of three hours in duration is started at 13 (hours) and 00 (minutes) on Monday and Wednesday every week, "1" is set in the flags of the Monday and Wednesday while "0" is set in the other flags. Thus, since an event repeated every week can be recorded in *repeat_type*, the necessary storage capacity can be smaller than for storage of the absolute date such as Monday and Wednesday corresponding to the broadcasting days.

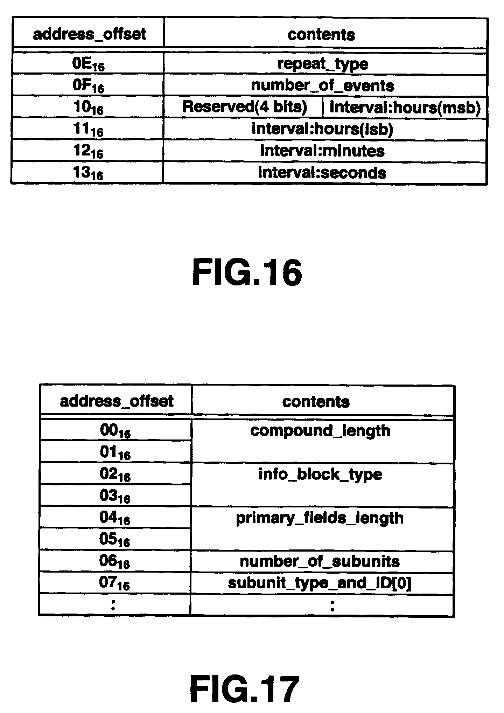

When the scheduled action is repeated at predetermined intervals, the posting device (BBS controller 5 in this embodiment) will describe an event in a format shown in FIG. 16. In this embodiment, *repeat_type* in FIG. 16 has described therein a value "10₁₆" shown in FIG. 14. *Number_of_events* has a number of events described therein. *Interval* indicates an interval from *start_time* of the current event until *start_time* of a next event. This interval is represented by hours, minutes and seconds. In *hours*, three figures indicating a three-digit hour are represented by BCD of 4 bits, respectively. Namely, the hours is represented by a total of 12 bits. In *minutes* and *seconds*, two figures indicating a two-digit minutes are represented by BCD of 4 bits, respectively. That is, the minutes and seconds are represented by a total of 8 bits, respectively. Thus, since an event which is periodically repeated can be stored in *repeat_type*, the necessary storage capacity can be smaller than for storage of the absolute time (date) at which the hours, minutes and seconds are started, respectively.

Further, *info Blocks* shown in FIG. 11 is formatted as shown in FIG. 17.

In FIG. 17, *compound_length* indicates the byte length of the *info Blocks*. However, the *length* field itself is not included in the length. *Info_block_type* is set to "8900₁₆". *Primary_fields_length* indicates numbers of bytes of *number_of_subunits* and *subunit_type_and_ID_field*, respectively. *Number_of_subunits* indicate a number of subunits used by the posting device (BBS controller 5 in this embodiment). *Subunit_type_and_ID* designates a subunit used by the posting device.

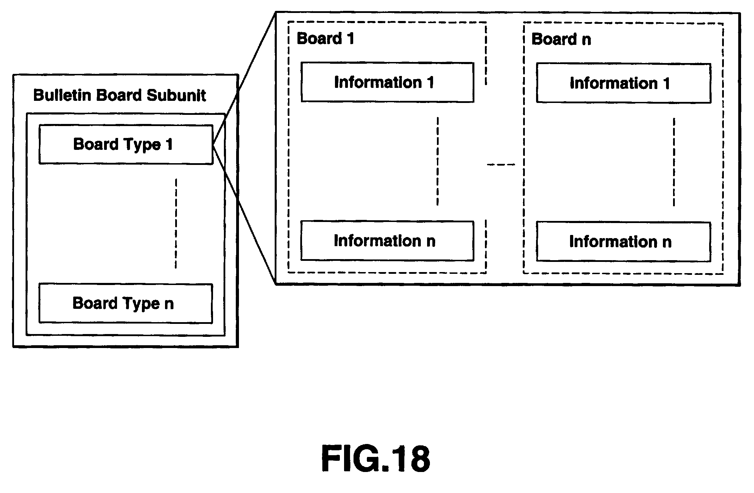

As having been described in the foregoing, the BBS supports multi-layering of *Board Type* as shown in FIG. 18. Each *Board Type* of the BBS is composed of *Board 1* to *Board n* each having Information. That is, the above-mentioned root list ID (*root_object_id*) is assigned to each board type, the BBS controller 5 reads the root list ID in the BB SID and compares it with an object board type, thereby permitting to check whether an object board type exists in a target BBS 4.

Also, the board list descriptors each being a collection of a plurality of board types include write-enabled and read-only types. These types are discriminated from each other based on their list types. In the case of a write-enabled board list of the BBS 4, the BBS controller 5 can remotely create a board of the same type. Further, when having detected that a list type is write-enabled, the BBS controller 5 can create a board by issuing a command for creating the AV/C command set. Also, the information list descriptors forming a board include write-enabled and read-only ones which can be discriminated from each other based on their list types.

Each root list ID (*root_object_id*) indicates a top list forming a board (Information List Descriptor) or a board list (Board List Descriptor) being a collection of a plurality of boards of the same type, and a board is composed of more than one information list descriptor. Further, a board list (Board List Descriptor) being a collection of a plurality of boards of the same type indicates a pointer to a top Information List Descriptor in each board. Also, when a board is composed of a plurality of lists, an address to a related Information List Descriptor is designated by a root list ID in the BB SID, Child List ID in the Board List Descriptor, or Child List ID in each Information Entry in a designated Information List Descriptor. A board can be represented by a plurality of lists by tracing the IDs.

Next, the AV/C command set used by the network system to which the present invention is applied will be described:

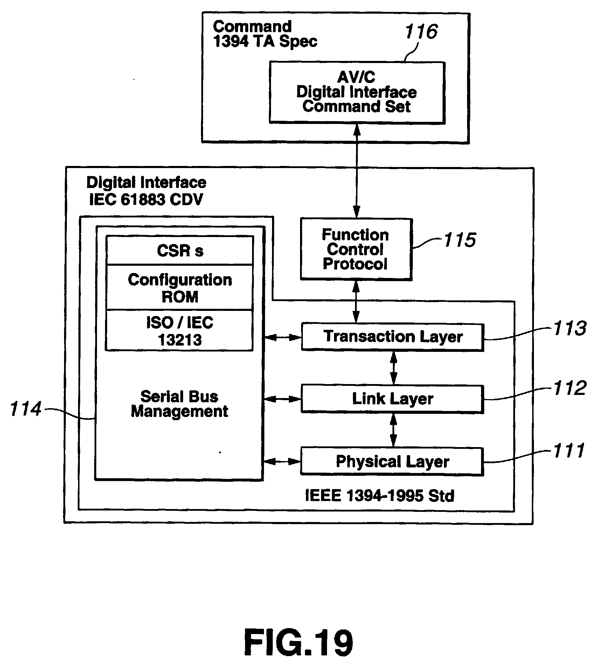

Referring now to FIG. 19, there is illustrated a stack model of the AV/C command set. As shown n FIG. 19, the stack model includes a physical layer 111, link layer 112, transaction layer 113 and serial bus management 114, all conforming to IEEE 1394. Also the stack model includes an FCP (function control protocol) 115 conforming to IEC 61883, and an AV/C command set 116 conforming to 1394 TA Specification.

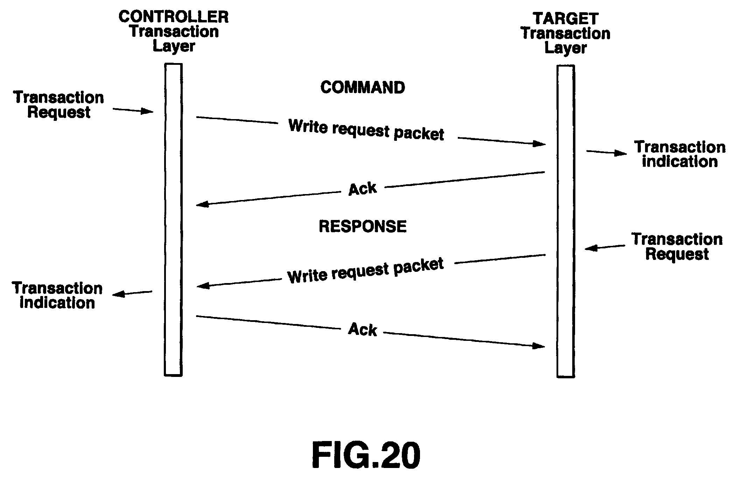

FIG. 20 explains a relation between a command to, and a response of, the FCP 115 in FIG. 19.

The FCP 115 is a protocol to control an AV device conforming to IEEE 1394. As shown in FIG. 20, the controlling side is a controller while the controlled side is a target. Sending of a command to the FCP 115, and response from the FCP, are made between nodes using a transaction of IEEE 1394 asynchronous communications. Having received data, the target sends back an acknowledge (ACK) for the data reception.

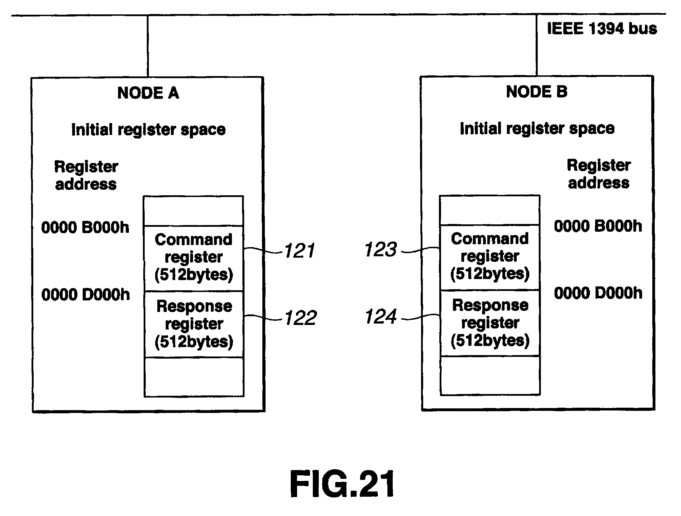

FIG. 21 further explains the relation between the command to, and response from the FCP shown in FIG. 20.

Nodes A and B are connected to each other via the IEEE 1394 bus. In an example shown in FIG. 21, the node A is the controller and the node B is the target. Each of the nodes A and B has provided therein a command register and response register each of 512 bytes. As shown in FIG. 21, the controller transmits an instruction by writing a command message to a command register 123 of the target.

Conversely, the target transmits a response by writing a response message to a response register 122 of the controller. These controller and target transfer the two messages in pair between them.

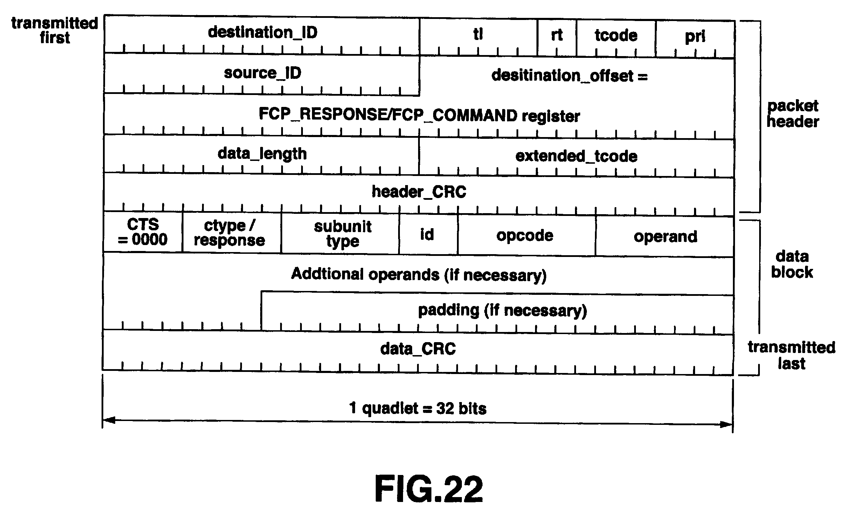

The type of a command set sent by the FCP is described in CTS in a data field shown in FIG. 22.

FIG. 22 shows the data structure of an asynchronous packet of the AV/C command. The asynchronous transfer packet is an asynchronous one-to-one communication packet in which a data source and data destination are defined.

The AV/C command set is a command set to control an AV device, and the CTS (command set ID) is "0000" (CTS = "0000"). Also, the FCP is used to transfer an AV/C command frame and response frame between the nodes. Further, a response to a command should be made within 100 ms for no burden to the bus and AV device.

As shown in FIG. 22, the asynchronous packet data is of 32 bits (= one quadlet) in the horizontal direction. The middle portion of FIG. 22 shows a header portion of he packet, an the lower portion shows a data block. In FIG. 22, *destination_ID* indicates a destination.

The CTS indicates a command set ID. In the AV/C command set, the CTS = "0000". In FIG. 22, the *ctype/response* field indicates a functional classification when the packet is a command, and a result of command processing when the packet is a response.

The commands generally include four types: a command to control the function from outside (CONTROL command), command to inquire the status from outside (STATUS command), GENERAL INQUIRY command to inquire from outside whether there is available a support for the CONTROL command (for inquiry of whether a support is available for *opcode*) and SPECIFIC INQUIRY command (for inquiry of whether supports are available for *opcode* and *operands*), and a command to request to notify a change of the status to outside (NOTIFY command).

The response is sent back depending upon the type of the command. The responses corresponding to the CONTROL command include NOT INPLEMENTED, ACCEPTED, REJECTED and INTERIM. The responses corresponding to the STATUS command include NOT IMPLEMENTED, REJECTED, IN TRANSITION and STABLE. The responses corresponding to the GENERAL INQUIRY and SPECIFIC INQUIRY commands include IMPLEMENTED and NOT IMPLEMENTED. The responses corresponding to the NOTIFY command include NOT IMPLEMENTED, REJECTED, INTERIM and CHANGED.

Subunit type in FIG. 22 is provided to identify the function in the device. For example, tape recorder/player, tuner, etc. are assigned to this field. To identify a plurality of subunits of the same type, if any, addressing is made using subunit id as an ID number. *Opcode* indicates a command, and operand indicates a parameter of the command. Additional *operands* is a field added as necessary. *Padding* is also a field added as necessary. *Data CRC* (cyclic redundancy check) is used for error check during data transmission.

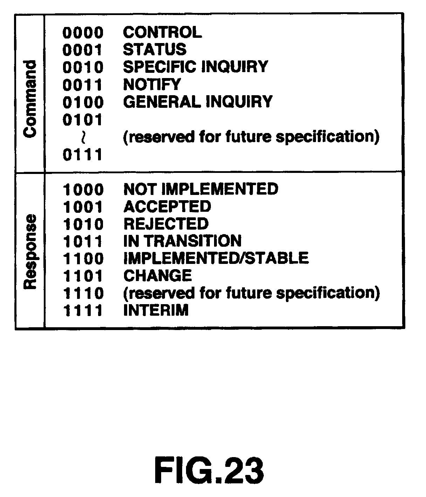

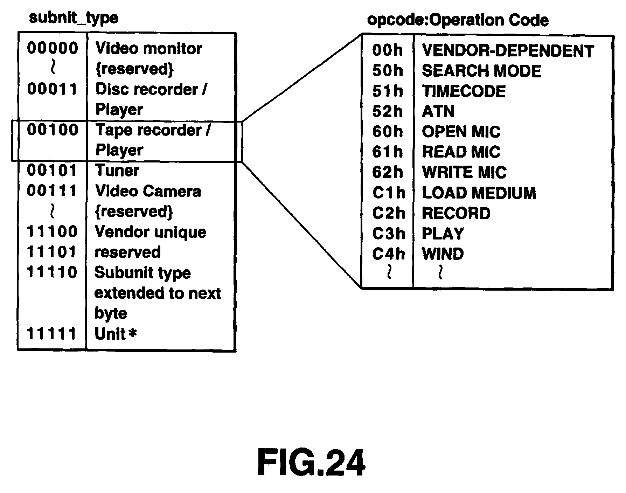

FIGS. 23 and 24 shows specific examples of the AV/C commands.

FIG. 23 shows a specific example of *ctype/response* of the asynchronous packet in FIG. 22. The upper portion of FIG. 23 shows commands, and lower portion show responses. "0000" is assigned CONTROL, "0001" is assigned STATUS, "0010" is assigned SPECIFIC INQUIRY, "0011" is assigned NOTIFY, and "0100" is assigned GENERAL INQUIRY. "0101" to "0111" are reversed for future specification. Also, "1000" is assigned NOT IMPLEMENTED, "1001" is assigned ACCEPTED, "1010" is assigned REJECTED, "1011" is assigned in TRANSITION, "1100" is assigned IMPLEMENTED/STABLE, "1101" is assigned CHANGED, and "1111" is assigned INTERIM. "1110" is reserved for future specification.

FIG. 24 shows a specific example of *subunit type* and *opcode*. "00000" of subunit_type in FIG. 24 is assigned Video monitor, "00011" is assigned Disk recorder/Player, "00100" is assigned Tape Recorder/Player, "00101" is assigned Tuner, "00111" is assigned Video camera, "11100" is assigned Vendor unique, and "11110" is assigned Subunit type extended to next byte. Note that although "11111" is assigned unit, this is sent to a unit itself and it includes power on/off for example.

As shown in FIG. 24, an opcode table exists for each subunit. In FIG. 24, an opcode when the subunit type is Tape recorder/Player is shown by way of example. Also, an operand is defined for each opcode. As shown, "00h" is assigned VENDOR-DEPENDENT, "50h" is assigned SEARCH MODE, "51h" is assigned TIMECODE, "52h" is assigned ATN, "60h" is assigned OPEN MIC, "61h" is assigned READ MIC, "62h" is assigned WRITE MIC, "C1h" is assigned LOAD MEDIUM, "C2h" is assigned RECORD, "C3h" is assigned PLAY, and "C4h" is assigned WIND.

A specific example of command and response for having an AV device as a target play back information will be described below with reference to FIG. 22. Since the AV device as a controller uses the AV/C command set, the CTS in FIG. 22 is set "0000", and since the command to control the device from outside (CONTROL command) is used, *ctype/response* is set *ctype* = "0000". Subunit type is the type of the subunit (*subunit type* = "00100" when the subunit type is Tape recorder/Player). *id* shows ID0 and it is 000. *opcode* is "C3h" meaning playback. *operand* is "75h" meaning FORWARD. Since a target having received this command responds with ACCEPTED, *ctype/response* set *ctype* = "1001a". The other values are the same as those for the commands from the controller.

Next, create command (CREATE) in the AV/C command set, issued from the BBS controller 5 to a BBS in which a list type can be written, will be described.

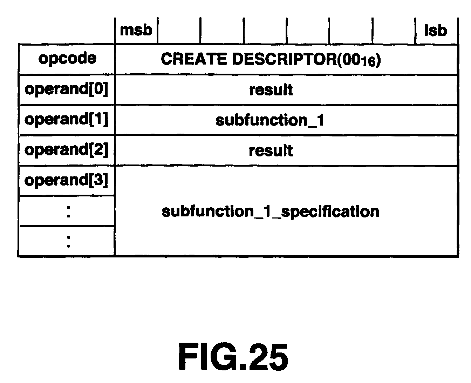

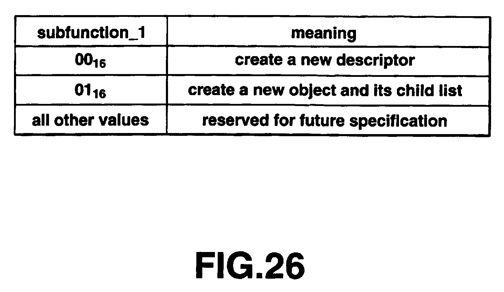

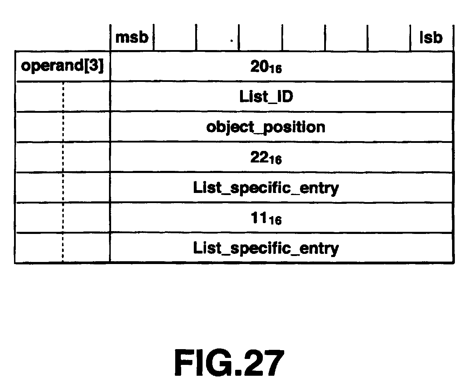

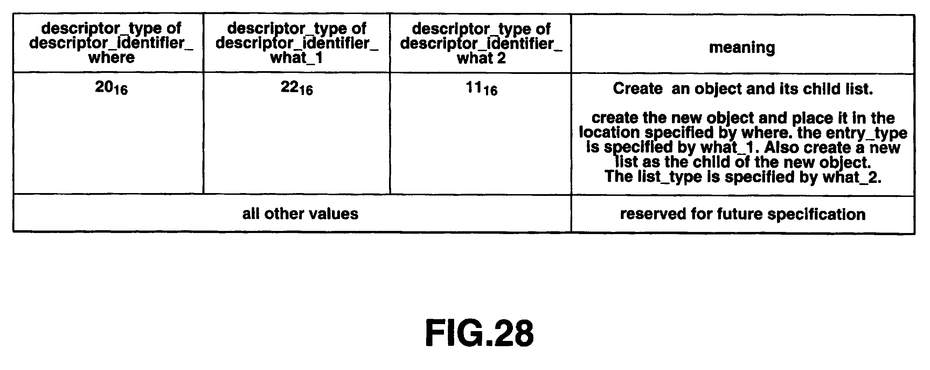

FIG. 25 shows the data structure of AV/C CREATE command. FIG. 26 shows a value which can be designated by *subfunction_1* in FIG. 25. In this embodiment, a value "01₁₆" in FIG. 26 is used. FIG. 27 shows a content which would be when *subfunction_1_specification* for *subfunction_1* in FIG. 25 is 01₁₆ for example. Also, FIG. 28 shows each field value in FIG. 27.

These AV/C CREATE commands are described in detail in the IEEE 1394 Standard. Each of the drawings showing the embodiment of the present invention is a citation of the drawings in the Standard (Enhancement to the AV/C General Specification 3.0 Version 1.0 FC2 and TA Document 1999005 AV/C Bulletin Board Subunit General Specification 1.0 Draft 0.99:149).

One of the general methods for write of new information to the AV/C descriptor from outside is, for example, for the BBS controller to provide a control under which the CREATE command is issued to the BBS as a target which will create a model to which information is to be written and then a specific content of the information is written again to the model. For example, to initially write information, the BBS controller designates a desired list and issues an AV/C Descriptor CREATE command. Receiving this command, the target BBS will create inside the BBS an object based on a model of the data structure specified in the AV/C General Specification. The model of the data structure specified in the AV/C General Specification has a field to indicate an object ID. As in the above, the BBS itself will manage the object ID in the list using the AV/C Descriptor. Namely, at the step when the object has been created, the BBS will impart to the object an ID which can uniquely designate the object, and the BBS will own a function to manage the ID.

The object ID is an ID number for uniquely designating the object in the list, and so the managing side should have a function to avoid imparting one object ID to more than one object. The AV/C BB is a system model in which the BBS itself provides information and an external controller has the function to manage the information. Therefore, the object ID is managed by the BBS controller.

However, when a CREATE command is issued to a subunit in such a system model, a conflict may possibly occur. That is, the object ID should be managed by the BBS controller, while the target BBS should impart an object ID to an object when created. Also, after the CREATE command is issued, it is necessary to continuously control the information write. Since an operation is done in a plurality of steps in this way, when the controller is disconnected from the bus in the middle of information write, an incomplete object may possibly be created.

Therefore, in the above-mentioned situation, a system is required which can identify such an incomplete object and delete it when the object is created.

Thus, the present invention provides a system which can define a method of writing information to the BBS by a standard for identification of any incomplete object.

More specifically, when an object is created in response to the CREATE command supplied from the BBS controller 5, the target (BBS 4 of the DVCR 3 in this embodiment) sets all global unique ID (GUID) vin the object ID to a predetermined value (zero in this embodiment), and the unique ID part is assigned number provisionally managed by the target (BBS 4 of the DVCR 3).

The BBS controller 5 will define an order in which information is first written to an object and when the information has successfully been written to the object, an object ID including the global unique ID (GUID) of the controller is finally rewritten to an object ID.

Owing to the above definition of the order, when the information has successfully been written, objects of which global unique ID (GUID) are all zero cannot be created. Also, objects of which GUIDs are all zero can be identified as incomplete ones, that is, ones being written.

Thus, according to this embodiment, an object being written can uniquely be identified, an object having successfully been written can be discriminated from an incomplete one, and also an incomplete object (invalid one) can easily be deleted. Thereby, a memory having a limited capacity provided in an electronic apparatus can be used effectively. Further, since the method of identification of an object being written is such a simple one in which all global unique ID (GUID) parts of an object ID are set zero, a software for deletion of an incomplete object can easily be created.

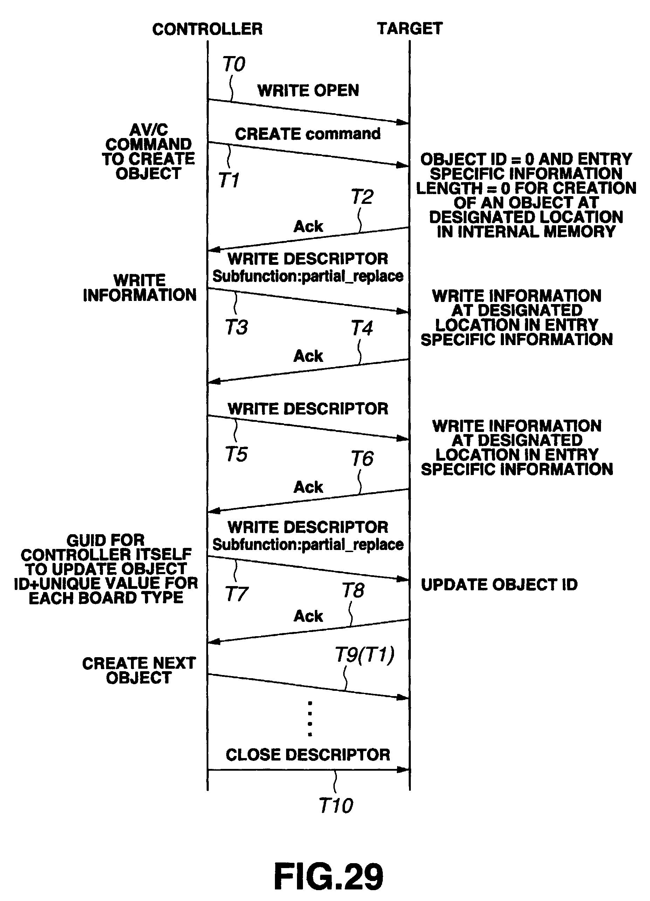

Next, operations of the BBS controller 5 and target BBS 4 for creation of a new object will be described with reference to FIG. 29.

As in FIG. 29, first the BBS controller 5 issues a WRITE OPEN command for creation of a new object, and sends it to the target BBS 4 at a step T0.

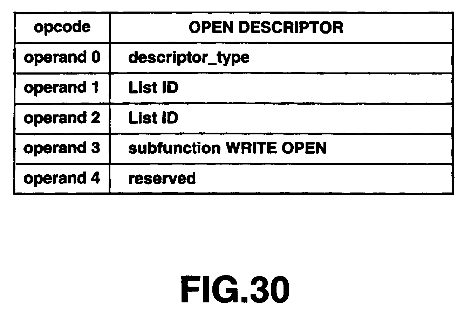

Referring now to FIG. 30, there is illustrated a format of the WRITE OPEN command which is provided from the BBS controller 5 for opening the target BBS 4 for write. The WRITE OPEN command shown in FIG. 30 is a kind of OPEN DESCRIPTOR command used for access to a predetermined address space of the target (BBS 4). In the WRITE OPEN command shown in FIG. 30, *opcode* has described therein a value "08₁₆" indicating that the command is the OPEN DESCRIPTOR command, and *operand 0* has described therein a value "10₁₆" indicating the command is an Object List Descriptor defined by the list ID, as *descriptor_type* indicating the kind of the descriptor to be opened for write. *Operands 1* and *2* have described therein a list ID to be accessed (to be opened for write). Further, *operand 3* has described therein a value "03₁₆" indicating that the command is a WRITE OPEN command to open the descriptor for access for read or write, as a subfunction. *Operand 4* has described therein a value "00" for reservation.

Next, the BBS controller 5 will issue an AV/C CREATE command and send it to the BBS 4 at a step T1.

Having received the CREATE command from the BBS controller 5, the BBS 4 creates an object (designated with *what_1* in FIG. 28) in a designated location in the internal memory (designated with *where* in FIG. 28), initializes the object ID to 0 and *entry_specific_information_length* to 0, and then sends back a response (ACK) command to the BBS controller 5 at a step T2.

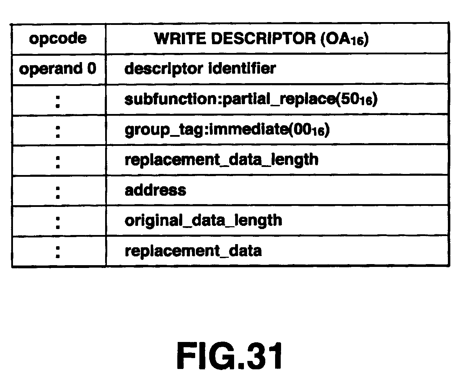

Next at step T3, the BBS controller 5 having received the response command from the BBS 4 uses *partial_replace* as a subfunction of the WRITE DESCRIPTOR command shown in FIG. 31 for write of information to instruct the BBS 4 for a partial replace.

Referring now to FIG. 31, there is illustrated a format of the WRITE DESCRIPTOR command provided from the BBS controller 5 in the above case. As shown, top *opcode* has described therein a value "0A₁₆" indicating that the command is the WRITE DESCRIPTOR command. *Operand 0* has described therein a descriptor identifier intended for identification of a descriptor to which information is to be written. This description is made in object position. The subsequent *opcodes* have described therein a value "50₁₆" indicating that the command is *partial_replace* as a subfunction. Thus, partial insert or partial delete is effected. For the insert, a new descriptor is inserted at a position preceding by one a position defined by an *operand* designed by *descriptor_identifier*. Note that for the delete, a descriptor defined by *descriptor_identifier* is deleted. *Group_tag* is used for an indivisible updating in a descriptor to which WRITE DESCRIPTOR command has to be issued. In this embodiment, *group_tap* has described therein a value "00₁₆" (immediate) indicating that data should be written quickly to the descriptor. *Replacement_data_length* indicates a number of bytes in operand of *replacement_data*, namely, a length of data to be written. Address indicates a position where data is to be written. Note that "0" in *replacement_data_length* indicates partial delete, in which case there is no operand for *replacement_data*. In this case, *original_data_length* indicates a value larger than "0" and which is a number of bytes to delete. When *original_data_length* is "0", partial insert is effected. In this case, *replacement_data_length* is larger than "0" and indicates a number of bytes to insert.

Having received the WRITE DESCRIPTOR command from the BBS controller 5, the BBS 4 writes information at a designated location (designated with where in FIG. 28) in the entry specific information, and then sends back a response command to the controller at a step T4.

Upon reception of the response command from the BBS 4, the BBS controller 5 will send WRITE DESCRIPTOR command to the BBS 4 again at a step T5.

Having received the WRITE DESCRIPTOR command from the controller, the BBS controller 4 writes information at a designated location in the entry specific information, and then sends back a response command to the BBS controller 4 at a step T6.

To update the object ID, the BBS controller 5 having received the response command from the BBS 4 generates, at step T7, a GUID for the BBS controller 5 and a unique value for each board type in the controller to instruct the BBS 4 for collective update of the object IDs using *partial_replace* as a subfunction of the WRITE DESCRIPTOR command.

Having received the write command from the BBS controller 5, the BBS 4 updates the object ID, and then sends back a response command to the BBS controller 5 at a step T8.

Upon reception of the response command from the BBS 4, the BBS controller 5 judges whether a next object should be created or not. When a next object should be created, the step T1 is repeated at a step 19. The subsequent operations of the BBS controller 5 and BBS 4 are the same as in the above.

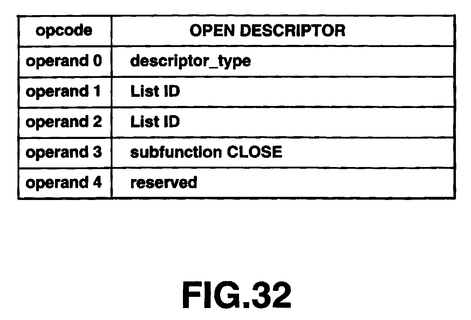

Thereafter, when all the operations are complete, the BBS controller 5 will sends to the BBS 4 a CLOSE command as shown in FIG. 32 at a step T10.

Referring now to FIG. 32, there is illustrated a format of the CLOSE command provided from the BBS controller 5. As shown, the format of the CLOSE command is basically similar to the format of the WRITE OPEN command shown in FIG. 30 except that its subfunction is "00₁₆" indicating that the command is a CLOSE command. In the format of The WRITE OPEN command, its subfunction is "03₁₆" indicating that the command is a WRITE OPEN command.

As having been described in the foregoing, this embodiment of the present invention is adapted such that in the data structure of the AV/C BBS for sharing information among a plurality of devices, one root list is provided for each board type, whereby the data structure can accommodate the existence of bulletin boards of more than one type. Also, since a list of a plurality of boards is provided in the root list, the data structure can accommodate the existence of a plurality of bulletin boards of the same type. Thereby, the embodiment of the present invention can easily solve the problems of the prior art that the method for coexistence of bulletin boards of more than one type and the list structure which should be when bulletin boards of the same time exist, are not definite. That is, the aforementioned embodiment of the present invention provides a data structure of the AV/C BBS for sharing information among a plurality of devices, in which one root list is provided for each board type to accommodate the existence of bulletin boards of more than one type.

Also in the embodiment, when having created an object, the target sets all global unique ID (GUID) parts of the object ID to zero, the unique ID part is assigned a number the target provisionally manages. The controller defines an order that information is written into the created object and when the information has successfully been written, a global unique ID (GUID) for the controller and a unique value in the controller are used to rewrite the object ID. Thus, an object being written can be identified uniquely to easily delete any invalid object. Therefore, in the embodiment, since the limited memory can be used effectively, and the method for identification of an object being written is implemented by a simple method in which all the global unique ID (GUID) parts are set to zero, a software to delete incomplete software can easily be generated.

Further, in the embodiment, when creating a new object, the controller issues a CREATE command to a target, *partial_replace* as a subfunction of he AV/C WRITE command is used to write entry specific information to the object created in response to the CREATE command, and then *partial_replace* as a subfunction of the AV/C WRITE command is used to rewrite the object IDs collectively, thereby permitting to easily create a new object.

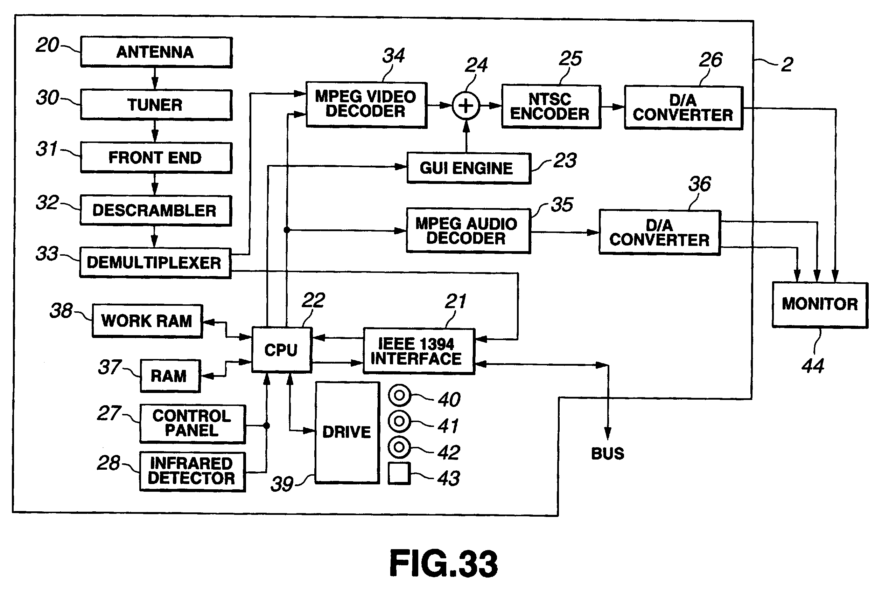

Referring now to FIG. 33, there is illustrated in detail the structure of the IRD 2 of the system in FIG. 1.

As shown in FIG. 33, a signal sent from the DVCR 3 or any other unit (not shown) via the bus 1 is supplied to a CPU 22 forming the main part of the BBS controller 5 and controller 6 via an IEEE 1394 interface 21. The CPU 22 generates from the input signal image data indicative of a menu screen and GUI (graphical user interface) data for example and provides it to a GUI engine 23. The GUI engine 23 provides the generated GUI data to an NTSC (National TV Standards Committee) encoder 25 via an adder 23, the NTSC encoder 25 converts the GUI data to NTSC data, a D/A converter 26 converts the NTSC data to an analog signal, and a variety of menu screens is displayed on a monitor 44 for example. Also, the CPU 22 controls the BBS controller 5 for read from or write to the BBS 4 of the DVCR 3 and issuance of an AV/C command.

The user operates a control panel 27 or remote commander (not shown) to select a desired unit and subunit of the DVCR 3 and other connected to the bus 1, and further designates an operation (function) to be performed by the selected unit and subunit. When the user operates the remote commander, an infrared detector 28 receives an infrared signal indicative of the operation by the user from the remote commander. The CPU 22 generates a control signal based on the signal indicative of the user's operation supplied from the control panel 27 or infrared detector 28, and supplies it to the GUI engine 23, MPEG video decoder 34 and MPEG audio decoder 35, and to the DVCR 3 and other via the IEEE 1394 interface 21 and bus 1. The CPU 22 displays on the monitor 44 broadcast waves received by an antenna 20 for example, and supplies it to the DVCR 3 and other via the IEEE 1394 interface 21 and bus 1. Note that the monitor 44 may be connected to the bus 1.

The antenna 20 receives broadcast waves from a satellite (not shown) and provides it to a tuner 30 forming a part of the digital tuner subunit 7. The tuner 30 selects a desired channel from the received broadcast waves based on the control signal supplied from the CPU 22. The received signal corresponding to the selected broadcast wave is demodulated and error-corrected by a front end block 31 and provided to a descrambler 32. Based on encrypted key information of a subscribed channel recorded in an IC card (not shown) inserted in the IRD body, the descrambler 32 provides multiplexed data on only data on the subscribed channel to a demultiplexer 33. The demultiplexer 33 rearranges the supplied multiplexed data for each channel, extracts only the data on a user-defined channel based on the input from the CPU 22, provides a video stream composed of a video packet of the data to an MPEG video decoder 34, and provides an audio stream composed of an audio packet to an MPEG audio decoder 35.

The MPEG video decoder 34 decodes the supplied video stream to reproduce the video data before compressed, and provides the reproduced video data to an NTSC encoder 25 which will convert the video data to an NTSC brightness signal and color-difference signal, and provides the signals as NTSC data to a D/A (digital/analog) converter 26. The D/A converter 26 converts the NTSC signal to an analog signal which will be sent to the monitor. Thus, an image is displayed on the screen of the monitor 44.

The MPEG audio decoder 35 decodes the audio stream to reproduce a PCM (pulse code modulated) audio data before compressed, and provides it to a D/A converter 36. The D/A converter 36 converts the PCM audio data to an analog signal to generate an R-channel audio signal and L-channel audio signal. These audio signals are sent to speakers (not shown) provided in the monitor 44.

The IRD 2 further includes a RAM 37 having stored therein various programs, data, etc. used for control of the operation of the IRD 2 as well as for calculation. Note that in case the IRD 2 includes a hard disc drive, the programs can be stored in the hard disc. The programs and data are read out by the CPU 22 as necessary. The RAM 37 has also a register to hold descriptors conforming to the AV/C General Specification. The IRD 2 includes also a work RAM 38 having stored therein data generated during execution of a program.

The IRD 2 includes also a drive 39 connected to the CPU 22. A magnetic disc 40, optical disc 41, magneto-optical disc 42 or a card-, stamp or stick-shaped semiconductor memory 43 can be used with the drive 39. The CPU 22 can read data from one of the magnetic disc 40 to semiconductor memory 43 inserted in the drive 39.

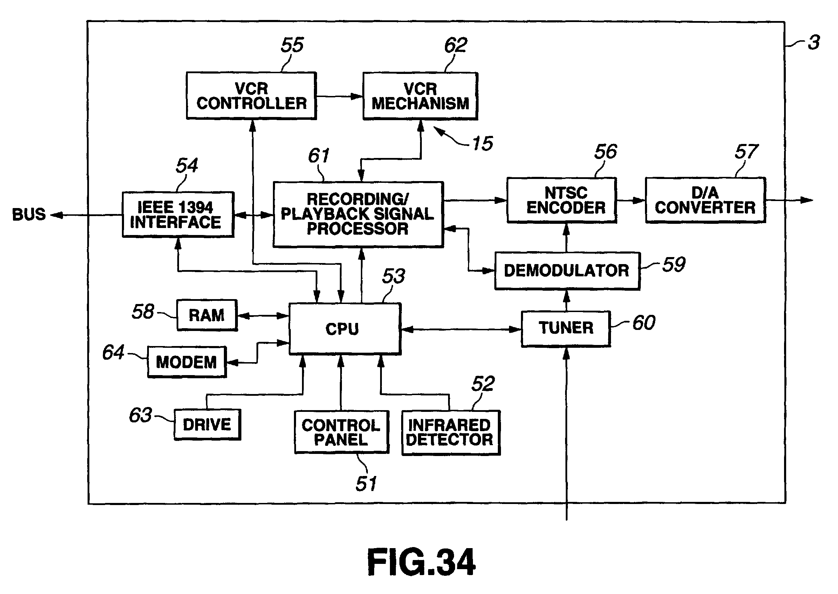

Referring now to FIG. 34, there is illustrated in detail the construction of DVCR 3 in the system in FIG. 1.

As shown in FIG. 34, the DVCR 3 includes a control panel 51, CPU 53, infrared detector 52, IEEE 1394 interface 54, etc. When the user operates the control panel 51 or a remote commander (not shown), the CPU 53 is supplied with a signal corresponding to the operation of the control panel 51 by the user (when the user operates the remote commander, the infrared detector 52 receives an infrared signal indicating the operation of the remove commander by the user and provides it to the CPU 53). Also, the CPU 53 is supplied with control signals and various data from other units connected to the bus 1 via the bus 1 and IEEE 1394 interface 54.

Based on the signals, the CPU 53 forming the main part of the controller 10 generates a control signal to control a VCR controller 55 for example, and provides it to the VCR controller 55 of the VCR subunit 15. Also, the CPU 53 sends to a recording/playback signal processor 61 image data supplied from any other unit via the bus 1 and IEEE 1394 interface 54 for example, controls a VCR mechanism 62 by means of the VCR controller 55 to record a recording signal generated from the image data at the recording/playback signal processor 61 to a video cassette tape (not shown) loaded in the VCR mechanism 62 or play back a recording signal recorded in the vide cassette tape, or sends the recording signal to the recording/playback signal processor 61 to reproduce the image data.

The reproduced image data is sent to an NTSC encoder 56. The data is converted in the NTSC encoder 56 to an NTSC data, converted in a D/A converter 57 to an analog signal, and then provided, for display, to the display unit such as a monitor for example, or sent to any other unit connected to the network via the IEEE 1394 interface 54 and bus 1. Note that the monitor may be connected to the bus 1.

When a video cassette tape (not shown) is loaded in the VCR mechanism 62, the VCR controller 55 will provide to te CPU 53 a signal indicating that the video cassette tape is loaded. Upon reception of the signal, the CPU 53 will display a symbol or characters indicative of the signal reception on the control panel 51 or illuminates LEDs to notify the user that a video cassette tape is loaded in the DVCR.

The DVCR 3 includes also a tuner 60 which selects, according to the control signal supplied from the CPU 53, a desired channel from broadcast ground waves received by the antenna (not shown). A received signal corresponding to the selected broadcast wave is demodulated by a demodulator 59 and sent to the recording/playback signal processor 61 ro NTSC encoder 56. The received signal sent to the recording/playback signal processor 61 is converted to a recording signal under the control of the CPU 53 and recorded to a video cassette tape (not shown) in the VCR mechanism 62 controlled by the VCR controller 55. Also, the received signal sent to the NTSC encoder 56 is converted to NTSC data by the NTSC encoder 56, further converted by the D/A converter 57 to an analog signal, and then supplied, for display, to a display unit such as a monitor (not shown) or sent to any other unit connected to the network via the IEEE 1394 interface 54 and bus 1.

The DVCR 3 includes also a RAM 58 having stored therein programs to implement by the BBS 4 creation of an object under the CREATE command from the BBS controller 5 (CPU 22) of the IRD 2, write open WRITE OPEN command, information write under WRITE DESCRIPTOR command, etc., various programs and data for operation control of the DVCR 3 and for use in calculation. Note that when the DVCR 3 is provided with a hard disc drive, such programs and data may be stored in the hard disc. The programs and data can be read out by the CPU 53 as necessary. Also, the RAM 53 has also a register to hole descriptors conforming to the AV/C General Specification, and has a memory space as the BBS 16. Further, the RAM 53 also functions as a work RAM to save data generated during execution of programs.

The DVCR 3 includes also a drive 63. This is connected to the CPU 53. A magnetic disc, optical disc, magneto-optical disc or a card-, stamp or stick-shaped semiconductor memory can be used with the drive 63 as in the IRD 2. The CPU 53 can read data from one of the magnetic disc to semiconductor memory inserted in the drive 63.

The DVCR 3 includes also a modem 64 which operates under the control of the CPU 53. The modem 64 is connected to a public network such as a telephone network.

Note that the present invention is not limited to the embodiment having been described in the foregoing but can be modified in various manners without departing from the scope and spirit of the present invention.

### Industrial Applicability

In the information processing apparatus and method and information processing system, according to the present invention, a predetermined object whose identification information is managed by an external apparatus is created in a predetermined description area to which external write is possible, and when the predetermined object is created, an object is created whose sole information in the identification information is set to a predetermined value and for which the length of a field in which the object can be written is set to a predetermined one. Thus, bulletin boards of more than one type or a plurality of bulletin boards of the same type, if any, can be allowed to coexist without any failure. Especially, object information being written can be identified, so that an incomplete object can easily be deleted.

Also, in the information processing apparatus and method, and information processing system, according to the present invention, identification information for at least a predetermined object is managed, a command for operation of the predetermined object is issued to external apparatuses capable of creating the predetermined object and having a predetermined description area to which write can be made from outside, and for an object created according to an object create command, the predetermined-object identification information is rewritten after writing information to a field to which the predetermined object can be written. Thus, bulletin boards of more than one type or a plurality of bulletin boards of the same type, if any, can be allowed to coexist without any failure. Especially, object information being written can be identified, so that an incomplete object can easily be deleted.

Further in the information processing apparatus and method, and information processing system, according to the present invention, the identification information for at least a predetermined object is managed, a command for operation of the predetermined object is issued to external apparatuses capable of creating the predetermined object and having a predetermined description area to which write can be made from outside, and for an object created according to an object create command, the predetermined-object identification information is collectively rewritten using instructive information for updating a write command, after writing, using instructive information for partial replacement of the write command, information to a field to which the predetermined object can be written. Thus, bulletin boards of more than one type or a plurality of bulletin boards of the same type, if any, can be allowed to coexist without any failure. Especially, object information being written can be identified, so that an incomplete object can easily be deleted. As the result, a new object can be written or rewritten without any failure.

## Claims

1. An information processor controlled by apparatuses connected to each other via a network, comprising:
a predetermined description area to which write can be made from outside; and
means for creating, upon reception from an external apparatus of a command for creation in the description area of a predetermined object whose identification information is managed by the external apparatus, an object whose sole information in the identification information is set to a predetermined value and for which the length of a field in which the object can be written is set to a predetermined one.

2. The information processor as set forth in Claim 1, wherein the object creating means deletes the object whose identification information is the predetermined value just after the predetermined description area is forcibly closed.

3. An information processor controlled by apparatus connected to each other via a network, comprising:
means for managing the identification information for at least a predetermined object; and
means for issuing a command for operation of the predetermined object to external apparatuses capable of creating the predetermined object and having a predetermined description area to which write can be made from outside;
the managing means rewriting, for an object created according to an object create command supplied from the operate command issuing means, the predetermined-object identification information after writing information to a field to which the predetermined object can be written.

4. The information processor as set forth in Claim 3, wherein the managing means rewrites the object identification information on an attempt.

5. The information processor as set forth in Claim 3, wherein the managing means examines the content of the sole information in the predetermined-object identification information; and
when it is decided by the managing means that the sole information is the predetermined value, the operation instruction issuing means issues a command for deletion of the predetermined object to the external apparatuses.

6. An information processing method for controlling apparatuses connected to each other via a network, comprising a step of:
creating, upon reception from an external apparatus of a command for creation in a description area of a predetermined object whose identification information is managed by the external apparatus, an object whose sole information in the identification information is set to a predetermined value and for which the length of a field in which the object can be written is set to a predetermined one,

7. The information processing method as set forth in Claim 6, wherein the object whose identification information is the predetermined value is deleted just after the predetermined description area is forcibly closed.

8. An information processing method for controlling apparatuses connected to each other via a network, comprising steps of:
managing the identification information for at least a predetermined object:
issuing a command for operation of the predetermined object to external apparatuses capable of creating the predetermined object and having a predetermined description area to which write can be made from outside; and
rewriting, for an object created according to an object create command supplied from the operate command issuing means, the predetermined-object identification information after writing information to a field to which the predetermined object can be written.

9. The information processing method as set forth in Claim 8, wherein the identification information for the object is rewritten on an attempt.

10. The information processing method as set forth in Claim 8, wherein the content of the sole information in the predetermined-object identification information is examined; and
when it is decided that the sole information is the predetermined value, a command for deletion of the predetermined object is issued to the external apparatuses.

11. An information processor for controlling apparatuses connected to each other via a network, comprising:
means for managing the identification information for at least a predetermined object; and
means for issuing a command for operation of the predetermined object to external apparatuses capable of creating the predetermined object and having a predetermined description area to which write can be made from outside;
the managing means collectively rewriting, for an object created according to an object create command supplied from the operate command issuing means, the predetermined-object identification information using instructive information for updating a write command from the operation instruction issuing means after writing, using instructive information for partial replacement of the write command from the operation instruction issuing means, information to a field to which the predetermined object can be written.

12. An information processing method for controlling apparatuses connected to each other via a network, comprising steps of:
managing the identification information for at least a predetermined object;
means for issuing a command for operation of the predetermined object to external apparatuses capable of creating the predetermined object and having a predetermined description area to which write can be made from outside; and
collectively rewriting, for an object created according to an object create command, the predetermined-object identification information using instructive information for updating a write command, after writing, using instructive information for partial replacement of the write command, information to a field to which the predetermined object can be written.

13. An information processing system comprising:
a first information processor including:
a predetermined description area to which write can be made from outside; and
means for creating, upon reception from an external apparatus of a command for creation in the description area of a predetermined object whose identification information is managed by the external apparatus, an object whose sole information in the identification information is set to a predetermined value and for which the length of a field in which the object can be written is set to a predetermined one; and
a second information processor including:
means for managing the identification information for at least a predetermined object; and
means for issuing a command for operation of the predetermined object to external apparatuses capable of creating the predetermined object and having a predetermined description area to which write can be made from outside;
the managing means rewriting, for an object created according to an object create command supplied from the operate command issuing means, the predetermined-object identification information after writing information to a field to which the predetermined object can be written.

14. The information processing system as set forth in Claim 13, wherein the object creating means in the first information processor deletes the object whose identification information is the predetermined value just after the predetermined description area is forcibly closed.

15. The information processing system as set forth in Claim 14, wherein the managing means in the second information processor rewrites the object identification information on an attempt.

16. The information processing system as set forth in Claim 13, wherein the managing means in the second information processor examines the content of the sole information in the predetermined-object identification information; and
when it is decided by the managing means that the sole information is the predetermined value, the operation instruction command issuing means in the second information processor issues a command for deletion of the predetermined object is issued to the external apparatuses.

17. The information processing system as set forth in Claim 13, wherein the managing means in the second information processor collectively rewrite, for an object created according to an object create command supplied from the operate command issuing means, the predetermined-object identification information using instructive information for updating a write command from the operation instruction issuing means after writing, using instructive information for partial replacement of the write command from the operation instruction issuing means, information to a field to which the predetermined object can be written.

18. An information processing method comprising:
a first information processing step of:
means for creating, upon reception from an external apparatus of a command for creation, in a predetermined description area to which write can be made from outside, of a predetermined object whose identification information is managed by the external apparatus, an object whose sole information in the identification information is set to a predetermined value and for which the length of a field in which the object can be written is set to a predetermined one; and
a second information processing step including steps of:
managing the identification information for at least a predetermined object;
issuing a command for operation of the predetermined object to external apparatuses capable of creating the predetermined object and having a predetermined description area to which write can be made from outside;
rewriting, for an object created according to an object create command, the predetermined-object identification information after writing information to a field to which the predetermined object can be written.

19. The information processing method as set forth in Claim 18, wherein at the first image processing step, the object whose identification information is the predetermined value is deleted just after the predetermined description area is forcibly closed.

20. The information processing method as set forth in Claim 18, wherein at the second information processing step, the object-identification information is rewritten on an attempt.

21. The information processing method as set forth in Claim 18, wherein at the second information processing step, the content of the sole information in the predetermined-object identification information is examined; and
when it is decided that the sole information is the predetermined value, a command for deletion of the predetermined is issued to the external apparatuses.

22. The information processing method as set forth in Claim 18, wherein at the second information processing step, the predetermined-object identification information is collectively rewritten for an object created according to the object create command, using instructive information for updating a write command, after writing, using instructive information for partial replacement of the write command from the operation instruction issuing means, information to a field to which the predetermined object can be written.
